# EUROPEAN PATENT APPLICATION

(11) **EP 4 477 679 A1**
(43) Date of publication of application: **18.12.2024**
(21) Application number: 23179056.9
(22) Date of filing: 13.06.2023
(51) Int. Cl.: C08F 110/06, C08F 4/649

(54) **PREPOLYMERISED ZIEGLER-NATTA CATALYSTS**

(71) Applicant: Borealis AG, 1020 Vienna (AT)
(72) Inventor: WANG, Jingbo, 4021 Linz (AT); LESKINEN, Pauli, 06850 Kulloo (FI); VIRKKUNEN, Ville, 06101 Porvoo (FI); HELISEVA, Emilia, 06101 Porvoo (FI)
(74) Representative: HGF

(57) **Abstract**

The disclosure relates to a process for producing a prepolymerised Ziegler-Natta catalyst.

The process comprises
Ai) reacting at least one acyclic alpha-olefin having 2 to 10 carbon atoms in the presence of a Ziegler-Natta catalyst, and
Aii) subsequently reacting a vinyl cycloalkane, a vinyl cycloalkene and/or a vinyl arene in the presence of the Ziegler-Natta catalyst; or
Bi) reacting a vinyl cycloalkane, a vinyl cycloalkene and/or a vinyl arene in the presence of the Ziegler-Natta catalyst, and
Bii) subsequently reacting at least one acyclic alpha-olefin having 2 to 10 carbon atoms in the presence of a Ziegler-Natta catalyst.
where Bi) a vinyl cycloalkane, a vinyl cycloalkene and/or a vinyl arene is reacted in the presence of a Ziegler-Natta catalyst and Bii) at least one acyclic alpha-olefin having 2 to 10 carbon atoms is subsequently reacted with the Ziegler-Natta catalyst, the weight ratio of the at least one acyclic alpha-olefin to Ziegler-Natta catalyst is less than 200:1.

## Description

The present disclosure relates to a process for producing a prepolymerised Ziegler-Natta catalyst composition. The present disclosure also relates to a prepolymerised Ziegler-Natta catalyst composition; a catalyst system for the polymerisation of propylene and a process for the production of polypropylene.

### BACKGROUND

Ziegler-Natta catalysts generally comprise (a) at least a catalyst component formed from a transition metal compound of Group 4 to 6 of the Periodic Table (IUPAC, Nomenclature of Inorganic Chemistry, 1989), and a metal compound of Group 1 to 3 of the Periodic Table (IUPAC). A Ziegler-Natta catalyst may also comprise a compound of group 13 of the Periodic Table (IUPAC) and/or an internal donor compound. Ziegler Natta catalysts may be used with (b) further catalyst component(s), such as cocatalysts and/or external donors.

Various methods for preparing Ziegler-Natta catalysts are known. For example, EP 1403292 A1, EP 0949280 A1, US-A-4294948, US-A-5413979, US-A-5409875 and EP 1273595 A1 describe processes for the preparation of such catalysts.

A prepolymerised Ziegler-Natta catalyst composition can be formed by polymerising a vinyl monomer in the presence of a Ziegler-Natta catalyst. The prepolymerised Ziegler-Natta catalyst composition is then used to catalyse the polymerisation of olefins. The use of a prepolymerised Ziegler-Natta catalyst composition can impart improved properties to the final polymer.

WO 2018/011165 and EP 2960256 describe solid catalyst particles comprising a Ziegler-Natta catalyst and a polymeric nucleating agent where the polymeric nucleating agent comprises vinyl monomer units, such as vinyl cyclohexane, and may be obtained in the presence of the Ziegler-Natta catalyst. WO 2020/064568 describes a solid ZN catalyst component is prepolymerised in the presence of one or more olefin monomer(s) selected from C2, C3 or C4 olefin monomers and mixtures thereof to obtain the prepolymerized solid ZN catalyst

### SUMMARY OF THE DISCLOSURE

According to a first aspect, the present disclosure provides a process for producing a prepolymerised Ziegler-Natta catalyst composition. The process comprises:
Ai) reacting at least one acyclic alpha-olefin having 2 to 10 carbon atoms in the presence of a Ziegler-Natta catalyst, and
Aii) subsequently reacting a vinyl cycloalkane, a vinyl cycloalkene and/or a vinyl arene in the presence of the Ziegler-Natta catalyst; or
Bi) reacting a vinyl cycloalkane, a vinyl cycloalkene and/or a vinyl arene in the presence of a Ziegler-Natta catalyst, and
Bii) subsequently reacting at least one acyclic alpha-olefin having 2 to 10 carbon atoms in the presence of the Ziegler-Natta catalyst,
wherein,
where Bi) a vinyl cycloalkane, a vinyl cycloalkene and/or a vinyl arene is reacted in the presence of a Ziegler-Natta catalyst, and Bii) at least one acyclic alpha-olefin having 2 to 10 carbon atoms is subsequently reacted in the presence of the Ziegler-Natta catalyst, the weight ratio of the at least one acyclic alpha-olefin to the Ziegler-Natta catalyst is less than 200:1

According to a second aspect, the present disclosure also provides a prepolymerised Ziegler-Natta catalyst composition obtainable by or obtained by the process of the first aspect described herein.

According to a third aspect, the present disclosure provides a catalyst system for the polymerisation of propylene, said catalyst system comprising a prepolymerised Ziegler-Natta catalyst composition according to the second aspect described herein, a co-catalyst and an external donor.

According to a fourth aspect, the present disclosure provides a process for the production of polypropylene comprising polymerising propylene in the presence of the prepolymerised Ziegler-Natta catalyst composition according to the second aspect described herein.

### DETAILED DESCRIPTION

As discussed above, a first aspect of the present disclosure provides a process for producing a prepolymerised Ziegler-Natta catalyst composition.

The process comprises:
Ai) reacting at least one acyclic alpha-olefin having 2 to 10 carbon atoms in the presence a Ziegler-Natta catalyst, and
Aii) subsequently reacting a vinyl cycloalkane, a vinyl cycloalkene and/or a vinyl arene in the presence of the Ziegler-Natta catalyst; or
Bi) reacting a vinyl cycloalkane, a vinyl cycloalkene and/or a vinyl arene in the presence of a Ziegler-Natta catalyst, and
Bii) subsequently reacting at least one acyclic alpha-olefin having 2 to 10 carbon atoms in the presence of the Ziegler-Natta catalyst,
wherein,
where Bi) a vinyl cycloalkane, a vinyl cycloalkene and/or a vinyl arene is reacted in the presence of a Ziegler-Natta catalyst and Bii) at least one acyclic alpha-olefin having 2 to 10 carbon atoms is subsequently reacted in the presence of the Ziegler-Natta catalyst, the weight ratio of the at least one acyclic alpha-olefin to Ziegler-Natta catalyst is less than 200:1, preferably, less than 100:1, for instance, 10:90 to 90:10.

The present disclosure also relates to a process for producing a prepolymerised Ziegler-Natta catalyst composition. The process comprises:
a) polymerising at least one acyclic alpha-olefin having 2 to 10 carbon atoms in the presence of a Ziegler-Natta catalyst; and
b) polymerising a vinyl cycloalkane, a vinyl cycloalkene and/or a vinyl arene in the presence of the same Ziegler-Natta catalyst,
where step a) and step b) are performed separately or subsequently in any order to provide a prepolymerised Ziegler-Natta catalyst composition comprising a Ziegler-Natta catalyst, a polymer having polymeric units derived from the at least one acyclic alpha-olefin having 2 to 10 carbon atoms and a polymer having polymeric units derived from vinyl cycloalkane, a vinyl cycloalkene and/or a vinyl arene, with the proviso that when step a) is performed prior to step a), the weight ratio of the at least one acyclic alpha-olefin to the Ziegler-Natta catalyst is less than 200:1.

The prepolymerised Ziegler-Natta catalyst composition may be used to as a catalyst for the polymerisation of a polymer, for example, propylene.

Advantageously, the prepolymerisation process results in the formation of polymers that act as nucleating agents. Without wishing to be bound by any theory, the polymers comprise polymeric units derived from the at least one acyclic alpha-olefin having 2 to 10 carbon atoms (e.g. 1-butene), and polymeric units derived from the vinyl cycloalkane or vinyl arene (e.g. vinyl cyclohexane). When polypropylene is subsequently produced in the presence of the prepolymerised catalyst composition, these polymers influence the crystallinity of the polypropylene produced. By improving the crystallinity, the polypropylene produced may have improved mechanical, thermal and/or optical properties.

The higher degree of crystallinity of the polypropylene may be evidenced by a higher crystallisation temperature, T_{c}. The higher degree of crystallinity can result in a polypropylene having a higher modulus, for instance, tensile modulus. In some examples, the prepolymerised Ziegler-Natta catalyst may be used to produce a polypropylene having improved stiffness.

The prepolymerised Ziegler-Natta catalyst may be used to produce a polypropylene having improved thermal properties. Such thermal properties include, for example, improved mechanical properties upon exposure to elevated temperatures. For instance, the prepolymerised Ziegler-Natta catalyst may be used to produce a polypropylene having reduced elongation at elevated temperatures, or improved dimensional stability and/or reduced creep.

In some examples, the prepolymerised Ziegler-Natta catalyst may be used to produce a polypropylene having a higher enthalpy of melting, Hₘ.

In some examples, the prepolymerised Ziegler-Natta catalyst may be used to produce a polypropylene having improved optical properties, for example, clarity, transparency and/or haze. In some examples, such properties may be improved, for instance when exposed to high temperatures, such as those encountered upon exposure to elevated temperatures during sterilization or pasteurization processes.

In the present disclosure, at least one acyclic alpha-olefin having 2 to 10 carbon atoms is reacted in the presence of Ziegler-Natta catalyst (e.g. Ai) or Bii)). Suitable acyclic alpha-olefins are discussed in further detail below. However, the acyclic alpha-olefin is preferably selected from at least one of ethylene, propylene, 1-butene, 1-pentene, 1-hexene, 1-heptene and 1-octene. For example, the acyclic alpha-olefin may be 1-butene. The reaction can produce a polymer having polymeric units derived from the at least one acyclic alpha-olefin having 2 to 10 carbon atoms (e.g. 1-butene).

The weight ratio of the at least one acyclic alpha-olefin having 2 to 10 carbon atoms to Ziegler-Natta catalyst may be 200:1 or less, for example, 100:1 or less. Where the process comprises steps Bi) and Bii), the weight ratio of the at least one acyclic alpha-olefin having 2 to 10 carbon atoms to Ziegler-Natta catalyst is 200:1 or less, for example, 100:1 or less. Where the process comprises Ai) and Aii), the weight ratio of the at least one acyclic alpha-olefin having 2 to 10 carbon atoms to Ziegler-Natta catalyst may be preferably 200:1 or less, for example, 100:1 or less. The weight ratio of the at least one acyclic alpha-olefin having 2 to 10 carbon atoms to Ziegler-Natta catalyst may be 10:90 to 90:10. For instance, the weight ratio of the at least one acyclic alpha-olefin to Ziegler-Natta catalyst is 20:80 to 80:20, preferably 30:70 to 70:30, more preferably 40:60 to 60:40, even more preferably 55:45 to 45:55.

Preferably, in step Ai) or step Bii), the weight ratio of the at least one acyclic alpha-olefin having 2 to 10 carbon atoms to Ziegler-Natta catalyst is 10:90 to 90:10. For instance, in step Ai) or step Bii), the weight ratio of the at least one acyclic alpha-olefin to Ziegler-Natta catalyst may be 20:80 to 80:20, preferably 30:70 to 70:30, more preferably 40:60 to 60:40, even more preferably 55:45 to 45:55..

In the present disclosure, a vinyl cycloalkane, vinyl cycloalkene and/or vinyl arene is reacted in the presence of the Ziegler-Natta catalyst (e.g. in step Aii) or Bi)). Suitable vinyl cycloalkanes, vinyl cycloalkanes and vinyl arenes are discussed below. However, vinyl cycloalkanes are preferred. The vinyl cycloalkane may be selected from vinyl cyclohexane, vinyl cyclopentane, vinyl-2-methyl cyclohexane and vinyl norbornane. More preferably, the vinyl cycloalkane is vinyl cyclohexane.

The sequential reactions in steps Ai) and Aii) or the sequential reactions of Bi) and Bii) can result in the prepolymerised Ziegler-Natta catalyst composition comprising polymers having polymeric units derived from the at least one acyclic alpha-olefin having 2 to 10 carbon atoms and polymers having polymeric units derived from a vinyl cycloalkane, vinyl cycloalkene and/or vinyl arene. The polymers in the prepolymerised Ziegler-Natta catalyst composition can act as nucleating agents that impart improved crystallinity to the final polypropylene. The sequential nature of the reactions Ai) and Aii), and Bi) and Bii) can allow for the sequential production of different polymers (e.g. (1) polymers having polymeric units derived from the at least one acyclic alpha-olefin having 2 to 10 carbon atoms and (2) polymers having polymeric units derived from a vinyl cycloalkane, vinyl cycloalkene and/or vinyl arene) that act as nucleating agents.

Preferably, in step Aii) or step Bi), the weight ratio of vinyl cycloalkane or vinyl arene to Ziegler-Natta catalyst may be less than 200:1, more preferably less than 100:1, for instance, 10:90 to 90:10. In some examples, the weight ratio of vinyl cycloalkane to Ziegler-Natta catalyst is 20:80 to 80:20, preferably 30:70 to 70:30, more preferably 40:60 to 60:40, even more preferably 55:45 to 45:55.

Preferably, the Ziegler-Natta catalyst comprises a compound of a transition metal selected from Groups 4 to 6 of the periodic table; a compound of a Group 1 to 3 metal; and an internal donor. More preferably, the Ziegler-Natta catalyst comprises a titanium compound, a magnesium compound and an internal donor. As discussed in further detail below, the internal donor may be a non-phthalic acid ester.

In some examples, at least one of steps Ai) and Aii) or at least one of steps Bi) and Bii) is/are carried out in the presence of a co-catalyst and optional presence of an external donor.

As discussed above, the present disclosure also provides a process for the production of polypropylene. The process comprises polymerising propylene in the presence of the prepolymerised Ziegler-Natta catalyst composition obtainable or obtained by the process for producing a prepolymerised Ziegler-Natta catalyst composition described herein. The prepolymerised Ziegler-Natta catalyst composition may be used as part of a catalyst system that additionally includes a co-catalyst and an external donor.

### Prepolymerisation of the Ziegler-Natta Catalyst

In an embodiment of the present disclosure ((Ai) and Aii)), at least one acyclic alpha-olefin is reacted in the presence of a Ziegler-Natta catalyst. A vinyl cycloalkane, vinyl cycloalkene and/or vinyl arene is then subsequently reacted in the presence of the Ziegler-Natta catalyst. Accordingly, in step Aii), a vinyl cycloalkane, vinyl cycloalkene and/or vinyl arene is reacted in the presence of the Ziegler-Natta catalyst that was present in the reaction of at least one acyclic alpha-olefin in step Ai). In some examples, the Ziegler-Natta catalyst remains unchanged (is the same) between steps Ai) and Aii).

Since step Aii) is subsequent to step Ai), step Aii) takes place after step Ai). However, Aii) need not immediately follow Ai and there may be intermediate reaction steps between Ai) and Aii) taking place. In some embodiments, however, Aii) is performed immediately after Ai).

Preferably, in step Ai), at least one acyclic alpha-olefin may be reacted in the presence of a Ziegler-Natta catalyst to produce an intermediate or modified Ziegler-Natta catalyst composition comprising a polymer having units derived from the at least one acyclic alpha olefin. In step Aii), a vinyl cycloalkane, vinyl cycloalkene and/or vinyl arene is subsequently reacted in the presence of the intermediate or modified Ziegler-Natta catalyst composition. The resulting product mixture may comprise polymer having units derived from the at least one acyclic alpha olefin and polymer having units derived from the vinyl cycloalkane, vinyl cycloalkene and/or vinyl arene.

In another embodiment (Bi) and Bii)), a vinyl cycloalkane, vinyl cycloalkene and/or vinyl arene is reacted in the presence of a Ziegler-Natta catalyst. At least one acyclic alpha-olefin is then subsequently reacted in the presence of the Ziegler-Natta catalyst. Accordingly, in step Bii), at least one acyclic alpha-olefin is reacted in the presence of the Ziegler-Natta catalyst that was present in the reaction of the at least one acyclic alpha-olefin in step Bi). In some examples, the Ziegler-Natta catalyst remains unchanged (is the same) in steps Bi) and Bii).

Since step Bii) is subsequent to step Bi), step Bii) takes place after step Bi). However, Bii) need not immediately follow Bi and there may be intermediate reaction steps between Bi) and Bii) taking place. In some embodiments, however, Bii) is performed immediately after Bi).

Preferably, in step Bi), a vinyl cycloalkane, vinyl cycloalkene and/or vinyl arene may be reacted in the presence of a Ziegler-Natta catalyst to produce an intermediate Ziegler-Natta catalyst composition comprising a polymer having units derived from the vinyl cycloalkane, vinyl cycloalkene and/or vinyl arene. In step Bii), the at least one acyclic alpha olefin is subsequently reacted in the presence of the intermediate Ziegler-Natta catalyst composition. The resulting product mixture may comprise polymer having units derived from the at least one acyclic alpha olefin and polymer having units derived from the vinyl cycloalkane, vinyl cycloalkene and/or vinyl arene.

The sequential reactions allow for a first polymer to form prior to the formation of a second polymer.

The prepolymerisation processes result in the formation of polymers that can act as nucleating agents. These polymers may have polymeric units derived from the at least one acyclic alpha-olefin having 2 to 10 carbon atoms (e.g. 1-butene). The polymers may also have polymeric units derived from the vinyl cycloalkane (e.g. vinyl cyclohexane), vinyl cycloalkene or vinyl arene. In some examples, the polymers may have both polymeric units derived from the at least one acyclic alpha-olefin having 2 to 10 carbon atoms (e.g. 1-butene) and polymeric units derived from the vinyl cycloalkane, vinyl cycloalkene or vinyl arene (e.g. vinyl cyclohexane).

These polymers can be incorporated into the final polypropylene. The polymers formed in the prepolymerisation reaction act as nucleating agents to influence the crystallinity and/or crystallization behaviour of the polypropylene produced. For example, when propylene is subsequently formed in the presence of the prepolymerised Ziegler-Natta catalyst, the polymeric nucleating agents present can influence the crystallinity and/or crystallization behaviour of the polypropylene produced. However, these polymers may not be present in detectable amounts in the final polypropylene composition.

The acyclic alpha-olefin used to form the prepolymerised Ziegler-Natta catalyst composition may be a branched or unbranched hydrocarbons having one carbon-carbon double bond having the formula CₙH₂ₙ, where n is 2 to 10. In the present disclosure, the carbon-carbon double bond is present in the alpha-position. Preferably, n may be 2 to 9, for example, 2 to 8. In some embodiments, n is 2 or 4 to 8, for example, 2, 4, 5, 6, 7 or 8. In a preferred embodiment, n is 4. For instance, the acyclic alpha-olefin used in step Ai) may be 1-butene.

The acyclic alpha-olefin is preferably linear.

Suitable acyclic alpha-olefins include ethylene, propylene, 1-butene, 1-pentene, 1-hexene, 1-heptene and 1-octene. Preferably, the acyclic alpha olefin is ethylene, propylene, 1-butene, 1-pentene, 1-hexene, 1-heptene and/or 1-hexene. More preferably, the acyclic alpha-olefin is ethylene, 1-butene, 1-pentene, 1-hexene, 1-heptene and/or 1-hexene, yet more preferably, the acyclic alpha-olefin is ethylene, 1-butene, 1-pentene or 1-hexene. More preferably, the acyclic alpha olefin is 1-butene. However, other examples of acyclic alpha-olefins include 3-methyl-1-butene, 3-ethyl-1-hexene, 3-methyl-1-pentene and 4-methyl-1-pentene. Combinations of two or more acyclic alpha-olefins may be used. For example, 1-butene and ethylene may be used in combination to produce copolymers that may act as nucleating agents.

Preferably, one type of acyclic alpha-olefin is reacted in the presence of the Ziegler-Natta catalyst. In some examples, however, the Ziegler-Natta catalyst is reacted in the presence of a mixture of two or more acyclic alpha-olefins in a co-polymerisation reaction in step Ai) or Bii).

In step Bii), the weight ratio of the at least one acyclic alpha-olefin having 2 to 10 carbon atoms to Ziegler-Natta catalyst is less than 200:1, preferably less than 100:1. The weight ratio may be less than 50:1, preferably less than 20:1, more preferably less than 10:1. In one embodiment, the ratio is 10:90 to 90:10, preferably 20:80 to 80:20, more preferably 30:70 to 70:30, even more preferably 40:60 to 60:40, for example, 45:55 to 55:45.

In step Ai), the weight ratio of the at least one acyclic alpha-olefin having 2 to 10 carbon atoms to Ziegler-Natta catalyst may be less than 200:1, preferably less than 100:1, for example, 10:90 to 90:10. The weight ratio may be less than 50:1, preferably less than 20:1, more preferably less than 10:1. In one embodiment, the ratio is 10:90 to 90:10, preferably 20:80 to 80:20, more preferably 30:70 to 70:30, even more preferably 40:60 to 60:40, for example, 45:55 to 55:45.

As mentioned above, when acyclic alpha-olefin is reacted in the presence of a Ziegler-Natta catalyst, a polymer having polymeric units derived from the at least one acyclic alpha-olefin having 2 to 10 carbon atoms (e.g. 1-butene) is produced. For example, the polymer may be a polyethylene, a polypropylene, a polybutene, a polypentene, a polyhexene, a polyheptene or a polyoctene. Preferably, the polymer is a polybutene (e.g. in step Ai)). The polymer is preferably a homopolymer. However, in some examples, the polymer chain may be a copolymeric chain formed from two or more different acyclic alpha-olefins as comonomers. For example, the copolymeric chains may comprise units derived from 1-butene and ethylene.

In step Aii) and step Bi), the vinyl cycloalkane, vinyl cycloalkene or vinyl arene is reacted in the presence of the Ziegler-Natta catalyst.

The vinyl cycloalkane, vinyl cycloalkene or vinyl arene may have the formula:

CH₂=CR¹R²

where R¹ is H or -CH₃, preferably H; and
R² is an optionally substituted cycloalkyl ring, an optionally substituted cycloalkenyl ring and/or an optionally substituted aryl ring or an optionally substituted fused ring system. The ring or fused ring system may contain 4 to 20 carbon atoms. Preferably, the ring or fused ring system may contain 5 to 12 carbon atoms. The ring or fused ring system may be unsubstituted or optionally substituted with one or more C₁ to C₆ alkyl groups, e.g. methyl groups. Where R² is an optionally substituted cycloakenyl, the cycloalkenyl may have one, two or three C=C double bonds.

In some examples, R² may contain 5 to 7 carbons.

Wherein R² is an optionally substituted aryl, it may be an optionally substituted phenyl ring.

Wherein R² is an optionally substituted cycloalkenyl, it may be an optionally substituted cyclohexenyl ring.

Preferably, R² is an optionally substituted cycloalkyl ring. More preferably, R² may be a cyclopentyl, cyclohexyl or norbornyl ring.

Preferably, a vinyl cycloalkane is used. The vinyl cycloalkane may be selected from vinyl cyclohexane, vinyl cyclopentane, vinyl-2-methyl cyclohexane and vinyl norbornane. More preferably, the vinyl cycloalkane is vinyl cyclohexane.

In some examples, a vinyl arene may be used. A suitable vinyl arene is styrene. In one example, 1-methyl styrene is used.

In step Aii) or Bi), the weight ratio of vinyl cycloalkane, vinyl cycloalkene and/or vinyl arene to Ziegler-Natta catalyst may be less than 200:1, preferably less than 100:1. The weight ratio may be less than 50:1, preferably less than 20:1, more preferably less than 10:1.

In some examples, in step Aii) or Bi), the weight ratio of vinyl cycloalkane, vinyl cycloalkene and/or vinyl arene to Ziegler-Natta catalyst may be 10:90 to 90:10. In some examples, in step Aii) or Bi), the weight ratio of vinyl cycloalkane, vinyl cycloalkene or vinyl arene to Ziegler-Natta catalyst is 20:80 to 80:20, preferably 30:70 to 70:30, more preferably 40:60 to 60:40, even more preferably 45:55 to 55:45.

When the vinyl cycloalkane, vinyl cycloalkene and/or vinyl arene is reacted in the presence of the Ziegler-Natta catalyst, a polymer having polymeric units derived from the vinyl cycloalkane, vinyl cycloalkene and/or vinyl arene (e.g. vinylcyclohexane) is produced. The polymer is preferably a homopolymer. In one example, the polymer is a polyvinyl cyclohexane.

In some examples, the ratio of the weight of acyclic alpha-olefin that is reacted in the presence of the Ziegler-Natta catalyst to the weight of vinyl cycloalkane, vinyl cycloalkene or vinyl arene that is reacted in the presence of the Ziegler-Natta catalyst may be 10:90 to 90:10, for example, 20:80 to 80:20, preferably 30:70 to 70:30, more preferably 40:60 to 60:40, even more preferably 45:55 to 55:45.

The prepolymerised Ziegler-Natta catalyst may have a prepolymerisation degree of 0.1 to 100 g polyolefin/g Ziegler-Natta cat, more preferably from 0.2 to 80 g polyolefin/ Ziegler-Natta g cat, yet more preferably 0.3 to 50 g polyolefin/g Ziegler-Natta cat, more preferably 0.4 to 40 g polyolefin/g Ziegler-Natta cat, even more preferably 0.5 to 30 g polyolefin/g Ziegler-Natta cat. The prepolymerisation degree may be determined from the mass of reacted monomer and the mass of Ziegler-Natta catalyst used in the reaction.

The prepolymerisation can be carried out in any inert fluid that does not dissolve the polymer(s) formed. The viscosity of the final catalyst/polymerised vinyl compounds/inert liquid mixture should also be sufficiently high to prevent the catalyst particles from settling during storage and transport. The adjustment of the viscosity of the mixture can be done either before or after the polymerisation of the vinyl compounds. It is, e. g., possible to carry out the prepolymerisation in a low viscosity oil and after the prepolymerisation of the vinyl compound the viscosity can be adjusted by addition of a highly viscous substance. Such highly viscous substance can be a "wax", such as an oil or a mixture of an oil with a solid or highly viscous substance (oil- grease). The viscosity of such a viscous substance is usually 1,000 to 15,000 cP at room temperature. The advantage of using wax is that the catalyst storing and feeding into the process is improved.

The weight ratio between the oil and the solid or highly viscous polymer is preferably less than 5:1. Suitable weight ratios may be determined by experimentation.

In addition to viscous substances, liquid hydrocarbons, such as isobutane, propane, pentane and hexane, can also be used as a medium in the modification step.

Preferably, the polypropylenes produced with the prepolymerised catalyst contain essentially no free (unreacted) vinyl compounds. This means that the vinyl compounds can be completely reacted in the prepolymerisation. To that end, the weight ratio of the total vinyl compounds added over stages Ai) and Aii) or Bi) and Bii) to the catalyst should be in the range of 0.2 to 10, preferably less than 3, more preferably about 0.2 to 2.0, and in particular about 0.3 to 1.5. It should be noted that limited benefits are achieved by using vinyl compounds in excess.

Further, the reaction time of the prepolymerisation should be sufficient to allow for complete reaction of the vinyl monomer, i. e. the polymerisation is continued until the amount of unreacted vinyl compounds in the reaction mixture (including the polymerisation medium and the reactants) is less than 0.5 wt.-%, in particular less than 2000 ppm by weight (shown by analysis). In some embodiments, there is complete reaction of the first monomer that is reacted in the presence of the catalyst (i.e. step Ai) or Bi) prior to addition of the second monomer (i.e. step Aii) or Bii). Thus, when the prepolymerised catalyst contains a maximum of about 0.1 wt.-% vinyl compound, the final vinyl compound content in the polypropylene may be below the limit of determination using the GC-MS method ( < 0.01 ppm by weight). Generally, when operating on an industrial scale, a polymerisation time of at least 30 minutes is required, preferably the polymerisation time is at least 1 hour and in particular at least 5 hours. Polymerisation times even in the range of 6 to 50 hours can be used. The prepolymerisation of the Ziegler-Natta catalyst can be done at temperatures of 10 to 90 °C, preferably 20 to 65 °C. The reaction temperature can be varied depending on the nature of the monomer being reacted in the presence of the Ziegler-Natta catalyst. For example, the reaction temperature for the polymerisation of the at least one acyclic alpha-olefin may be lower than the reaction temperature for the polymerisation of the vinyl cycloalkane, vinyl cycloalkene and/or vinyl arene. Preferably, therefore, stage Ai) is performed at a lower temperature than stage Aii).

The prepolymerisation may be carried out in the presence of a co-catalyst and optional presence of an external donor.

General conditions for the prepolymerisation of catalysts are also disclosed in WO 00/6831, which is incorporated herein by reference.

In the present disclosure, the prepolymerisation may be advantageously carried out in sequential stages. Preferably, stages Ai) and Aii) or Bi) and Bii) are performed sequentially in the same reactor or reaction medium.

In an example of the present disclosure, the Ziegler-Natta catalyst may be dispersed in a solvent to form a slurry. In step Ai), the at least one acyclic alpha-olefin (e.g. 1-butene) may be added to the slurry. The temperature of reaction may be maintained at 10 to 90°C. In some examples, the temperature for this stage Ai) may be 15 to 40°C, for example, 20 to 30°C, particularly where the acyclic alpha-olefin is 1-butene. Prior to addition of the at least one acyclic alpha-olefin (e.g. 1-butene), a co-catalyst and an external donor may be added to the slurry. The co-catalyst and external donor may activate the catalyst.

The at least one acyclic alpha-olefin (e.g. 1-butene) and Ziegler-Natta catalyst may be reacted for sufficient time to polymerise the at least one acyclic alpha-olefin. In some examples, the reaction is carried out such that the majority of the added acyclic alpha-olefin (e.g. 1-butene) is consumed. The slurry may be stirred or otherwise agitated during the reaction.

It may be possible to separate an intermediate product containing the Ziegler-Natta catalyst and the polymerised acyclic alpha-olefin (e.g. 1-butene) prior to the second stage, stage Aii), of the process. However, it is preferable for the second stage, stage Aii), of the prepolymerisation reaction to be carried out in the same reactor or reaction medium. For example, the vinyl cycloalkane (e.g. vinyl cyclohexane), vinyl cycloalkene or vinyl arene may be introduced into the same reaction medium. The reaction temperature may be altered accordingly. For example, in one embodiment, the reaction temperature may be raised to 40 to 90°C, preferably 50 to 70°C, more preferably 55 to 65°C. The reaction may be carried out for sufficient time to polymerise the vinyl cycloalkane (e.g. vinyl cyclohexane), vinyl cycloalkene or vinyl arene and produce the prepolymerised Ziegler-Natta catalyst composition.

In an alternative embodiment, the Ziegler-Natta catalyst may be dispersed in a solvent to form a slurry. In step Bi), the vinyl cycloalkane (e.g. vinyl cyclohexane), vinyl cycloalkene or vinyl arene may be added to the slurry. Prior to addition of the monomer, a co-catalyst and an external donor may be added to the slurry. The co-catalyst and external donor may activate the catalyst.

The vinyl cycloalkane (e.g. vinyl cyclohexane), vinyl cycloalkene or vinyl arene and Ziegler-Natta catalyst may be reacted for sufficient time to polymerise the monomer. In some examples, the reaction is carried out such that the majority of the added monomer is consumed. The slurry may be stirred or otherwise agitated during the reaction.

It may be possible to separate an intermediate product containing the Ziegler-Natta catalyst and the polymerised vinyl cycloalkane (e.g. vinyl cyclohexane), vinyl cycloalkene or vinyl arene prior to the second stage, stage Bii), of the process. However, it is preferable for the second stage, stage Bii), of the prepolymerisation reaction to be carried out in the same reactor or reaction medium. For example, the at least one acyclic alpha-olefin may be introduced into the same reaction medium. The reaction temperature may be altered accordingly. The reaction may be carried out for sufficient time to polymerise the at least one acyclic alpha-olefin and produce the prepolymerised Ziegler-Natta catalyst composition.

The prepolymerised catalyst may be recovered and used in a process for the polymerisation of propylene.

### Ziegler-Natta Catalysts

The Ziegler-Natta catalyst is a solid component comprising a compound of a transition metal selected from Groups 4 to 6 of the periodic table (IUPAC); a compound of a Group 1 to 3 metal of the periodic table (IUPAC); and an internal donor.

Preferably, the compound of a transition metal selected from Groups 4 to 6 of the periodic table (IUPAC) is a titanium compound. More preferably the titanium compound is a titanium halide, most preferably TiCl₄. The compound of a transition metal (e.g. titanium compound) may be present in an amount of from about 1 to about 6 wt.-%.

Preferably, the compound of a Group 1 to 3 metal of the periodic table (IUPAC); is a magnesium compound. The metal compound (e.g. magnesium compound) may be present in an amount of from about 10 to about 20 wt.-%.

In some examples, the internal donor is a non-phthalic compound. Preferably, the internal donor is a non-phthalic acid ester, more preferably bring a diester of non-phthalic dicarboxylic acids. The internal donor may be a non-phthalic acid ester selected from the group consisting of optionally substituted malonates, maleates, succinates, glutarates, citraconates and derivatives and/or mixtures thereof. Even more preferably, the internal donor is selected from substituted maleates and citraconates, most preferably the internal donor is a citraconate. The internal donor (e.g. a non-phthalic compound e.g. citraconate) may be present in an amount of from about 5 to about 10 wt.-%.

Ideally, the catalyst is fully free of undesired phthalic compounds. Further, the solid catalyst is free of any external support material, like silica, but the catalyst is self-supported.

In preferred examples, the Ziegler-Natta catalyst comprises a titanium compound, a magnesium compound and an internal donor, preferably wherein the titanium compound is present in an amount of from about 1 to about 6 wt.-%, the magnesium compound is present in an amount of from about 10 to about 20 wt.-% and the internal donor is present in an amount of from about 5 to about 10 wt.-%.

Detailed description of the preparation of Ziegler-Natta catalysts is disclosed in WO2012/007430, EP2415790, EP2610270, EP2610271, EP2610272, WO/2020064568 and EP2960256 which are incorporated herein by reference.

The Ziegler-Natta catalyst can be further defined by the way it may be obtained. Accordingly, the Ziegler-Natta catalyst is preferably obtainable by a process comprising:
a1) providing a solution of at least a Group 2 metal alkoxy compound (Ax) being the reaction product of a Group 2 metal compound (MC) and a monohydric alcohol (A) comprising in addition to the hydroxyl moiety at least one ether moiety optionally in an organic liquid reaction medium; or
a2) a solution of at least a Group 2 metal alkoxy compound (Ax') being the reaction product of a Group 2 metal compound (MC) and an alcohol mixture of the monohydric alcohol (A) and a monohydric alcohol (B) of formula ROH, optionally in an organic liquid reaction medium; or
a3) providing a solution of a mixture of the Group 2 alkoxy compound (Ax) and a Group 2 metal alkoxy compound (Bx) being the reaction product of a Group 2 metal compound (MC) and the monohydric alcohol (B), optionally in an organic liquid reaction medium; or
a4) providing a solution of Group 2 alkoxide of formula M(ORᵢ)ₙ (OR₂)ₘ X₂₋ₙ₋ₘ or mixture of Group 2 alkoxides M(ORᵢ)_{n'}X_{2-n'} and M(OR₂)_{m'}X_{2-m'}, where M is Group 2 metal, X is halogen, R₁ and R₂ are different alkyl groups of C₂ to C₁₆ carbon atoms, and 0 ≤n < 2, 0 ≤ m < 2 and n+m+(2-n-m) = 2, provided that both m≠ 0, 0 < n' ≤ 2 and 0 < m' ≤ 2; and
b) bringing said solution from step a) into contact with at least one compound (TC) of a transition metal of Group 4 to 6 and
c) obtaining the solid catalyst component particles, and
optionally, adding an internal electron donor (ID), preferably a non-phthalic internal donor (ID), at any step prior to step c).

The internal donor (ID) or precursor thereof is preferably added to the solution of step a) or to the transition metal compound before contact with the solution of step a).

According to the procedure above the Ziegler-Natta catalyst can be obtained via precipitation method or via emulsion-solidification method depending on the physical conditions, especially temperature used in steps b) and c). In this application, emulsions are also referred to as a liquid/liquid two-phase systems. In both methods (precipitation or emulsion-solidification) the catalyst chemistry is the same.

In the precipitation method, the solution of step a) is combined with at least one transition metal compound (TC) in step b). The whole reaction mixture is kept at a temperature of at least 50 °C, more preferably in a temperature range of 55 to 110 °C, more preferably in a temperature range of 70 to 100 °C, to secure full precipitation of the catalyst component in form of a solid particles (step c). In an emulsion-solidification method, the solution of step a) is typically added to the at least one transition metal compound (TC) in step b) at a lower temperature, such as from -10 to below 50 °C, preferably from -5 to 30 °C. During agitation of the emulsion, the temperature is typically kept at -10 to below 40 °C, preferably from -5 to 30 °C. Droplets of the dispersed phase of the emulsion form the active catalyst composition. Solidification (step c) of the droplets is suitably carried out by heating the emulsion to a temperature of 70 to 150 °C, preferably to 80 to 110 °C.

In a preferred embodiment, in step a) the solution of a2) or a3) are used, i.e. a solution of (Ax') or a solution of a mixture of (Ax) and (Bx), especially the solution of a2 ). Preferably the Group 2 metal (MC) is magnesium.

The magnesium alkoxy compounds as defined above can be prepared in situ in the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are glycol monoethers. Preferred alcohols (A) are C₂ to C₄ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propyleneglycol-monobutyl ether, 3- butoxy-2-propanol being particularly preferred.

Illustrative monohydric alcohols (B) are of formula ROH, with R being straight-chain or branched C₂ -C₁₆ alkyl residue, preferably C₄ to C₁₀, more preferably C6 to C8 alkyl residue. The most preferred monohydric alcohol is 2-ethyl-1 -hexanol or octanol. Preferably a mixture of Mg alkoxy compounds (Ax) and (Bx) or mixture of alcohols (A) and (B), respectively, are used and employed in a mole ratio of Bx:Ax or B:A from 10:1 to 1:10, more preferably 6:1 to 1:6, most preferably 4:1 to 1:4.

Magnesium alkoxy compound may be a reaction product of alcohol(s), as defined above, and a magnesium compound selected from dialkyl magnesium, alkyl magnesium alkoxides, magnesium dialkoxides, alkoxy magnesium halides and alkyl magnesium halides. Further, magnesium dialkoxides, magnesium diaryloxides, magnesium aryloxyhalides, magnesium aryloxides and magnesium alkyl aryloxides can be used. Alkyl groups can be a similar or different C₁-C₂₀ alkyl, preferably C₂-C₁₀ alkyl. Typical alkyl-alkoxy magnesium compounds, when used, are ethyl magnesium butoxide, butyl magnesium pentoxide, octyl magnesium butoxide and octyl magnesium octoxide. Preferably the dialkyl magnesium are used. Most preferred dialkyl magnesium are butyl octyl magnesium or butyl ethyl magnesium.

It is also possible that the magnesium compound can also with a polyhydric alcohol (C) of formula R"(OH)ₘ to obtain said magnesium alkoxide compounds. Preferred polyhydric alcohols, if used, are alcohols, wherein R" is a straight-chain, cyclic or branched C₂ to C₁₀ hydrocarbon residue, and m is an integer of 2 to 6.

The magnesium alkoxy compounds of step a) are thus selected from the group consisting of magnesium dialkoxides, diaryloxy magnesium, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylene, pentane, hexane, heptane, octane and nonane. Hexanes and pentanes are particular preferred. The reaction for the preparation of the magnesium alkoxy compound may be carried out at a temperature of 40 to 70 °C. Most suitable temperature is selected depending on the Mg compound and alcohol(s) used.

The transition metal compound of Group 4 to 6 is preferably a titanium compound, most preferably a titanium halide, like TiCl₄ .

The internal donor (ID) used in the preparation of the catalyst used in the present invention is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched C₁₂ to C₂₀ (meth)acrylates such as poly(hexadecyl)-methacrylate and poly(octadecyl)-methacrylate and mixtures thereof. Turbulence minimizing agent (TMA), if used, is preferably selected from α-olefin polymers of alpha-olefin monomers with 6 to 20 carbon atoms, like polyoctene, polynonene, polydecene, polyundecene or polydodecene or mixtures thereof. Most preferable it is polydecene.

The Ziegler-Natta catalyst may be a particulate product, which may be washed at least once, preferably at least twice, most preferably at least three times with an aromatic and/or aliphatic hydrocarbons, preferably with toluene, heptane or pentane and or with TiCl₄. Washing solutions can also contain donors and/or compounds of Group 13, like trialkyl aluminum, halogenated alky aluminum compounds or alkoxy aluminum compounds. Aluminum compounds can also be added during the catalyst synthesis. The catalyst can further be dried, as by evaporation or flushing with nitrogen, or it can be slurried to an oily liquid without any drying step.

The final Ziegler-Natta catalyst is desirably in the form of particles having generally an average particle size range of 5 to 200 µm, preferably 10 to 100 µm.

Particles are compact with low porosity and have surface area below 20 g/m² , more preferably below 10 g/m² . Typically the amount of Ti is 1 to 6 wt.-%, Mg 10 to 20 wt.-% and donor 10 to 40 wt.-% of the catalyst composition. Detailed description of preparation of catalysts is disclosed in WO 2012/007430, EP2610271, EP 2610270 and EP2610272 which are incorporated here by reference.

### Co-catalyst and External Donors

The Ziegler-Natta catalyst may be used in association with an alkyl aluminum cocatalyst and external donors.

The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Advantageously, the triethyl aluminium (TEAL) has a hydride content, expressed as AlH₃, of less than 1.0 wt.-% with respect to the triethyl aluminium (TEAL). More preferably, the hydride content is less than 0.5 wt.-%, and most preferably the hydride content is less than 0.1 wt.-%.

Suitable external donors (ED) include certain silanes, ethers, esters, amines, ketones, heterocyclic compounds and blends of these. It is especially preferred to use a silane. It is most preferred to use silanes of the general formula:

R^{a}ₚ R^{b}_{q} Si(OR^{c})(_{4-p-q}),

wherein R^{a}, R^{b} and R^{c} denote a hydrocarbon radical, in particular an alkyl or cycloalkyl group, and wherein p and q are numbers ranging from 0 to 3 with their sum p + q being equal to or less than 3. R^{a}, R^{b} and R^{c} can be chosen independently from one another and can be the same or different. Specific examples of such silanes are (tert-butyl)₂ Si(OCH₃)₂, (cyclohexyl)(methyl)Si(OCH₃)₂, (phenyl)₂ Si(OCH₃)₂ and (cyclopentyl)₂ Si(OCH₃)₂, or of general formula

   Si(OCH₂CH₃)₃(NR³R⁴)
wherein R³ and R⁴ can be the same or different a represent a hydrocarbon group having 1 to 12 carbon atoms.

R³ and R⁴ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that R³ and R⁴ are independently selected from the group consisting of methyl, ethyl, n-propyl, n-butyl, octyl, decanyl, iso-propyl, iso-butyl, iso-pentyl, tert. -butyl, tert.-amyl, neopentyl, cyclopentyl, cyclohexyl, methylcyclopentyl and cycloheptyl.

Especially preferred external donors (ED) are the pentyl dimethoxy silane donor (D-donor) or the cyclohexylmethyl dimethoxy silane donor (C-Donor).

Preferably the ratio between the co-catalyst (Co) and the external donor (ED) [Co/ED] and/or the ratio between the co-catalyst (Co) and the transition metal (TM) [Co/TM] should be carefully chosen.

Accordingly, the mol-ratio of co-catalyst (Co) to external donor (ED) [Co/ED] must be in the range of 5 to 45, preferably is in the range of 5 to 35, more preferably is in the range of 5 to 25; and optionally the mol-ratio of co-catalyst (Co) to titanium compound (TC) [Co/TC] must be in the range of above 80 to 500, preferably is in the range of 100 to 350, still more preferably is in the range of 120 to 300.

### Polymerisation of Propylene

As discussed above, the present disclosure also relates to a process for producing a propylene polymer. The process comprises the steps of polymerising propylene in the presence of the prepolymerised Ziegler-Natta catalyst described herein.

The polymerisation of propylene may be carried out in a separate reactor and/or reaction medium using the prepolymerised Ziegler-Natta catalyst. For example, once the prepolymerised Ziegler-Natta catalyst is formed, at least a portion of the catalyst slurry can be recovered, optionally stored, and used to catalyse a propylene polymerisation reaction in a separate reactor or reaction medium.

The propylene polymerisation may be carried out in the presence of a co-catalyst and/or in the presence of an external donor. The co-catalyst and/or external donor used may be the same or different from any co-catalyst and/or external donor used to produce the prepolymerised Ziegler-Natta catalyst. In some examples, for instance, where the prepolymerised Ziegler-Natta catalyst is recovered and introduced into a separate reactor or reaction medium, additional co-catalyst and additional external donor is used together with the prepolymerised Ziegler-Natta catalyst. This additional co-catalyst and external donor may be the same or different from the co-catalyst and external donor employed when producing the prepolymerised Ziegler-Natta catalyst.

Propylene may be polymerised in the presence of the prepolymerised Ziegler-Natta catalyst in any suitable manner. In some examples, propylene is used as the sole monomer. In other examples, propylene is copolymerised with one or more comonomers, for example, a C₂ or a C₄ to C₁₀ olefin.

The equipment used for propylene polymerisation can comprise any polymerization reactors suitable for producing propylene homo- or copolymers. In view of this, the polymerization is conducted in one or more polymerization reactor(s). Preferably, the polymerization reactor system can comprise one or more conventional stirred-tank slurry reactors, or one or more gas phase reactors or combinations thereof.

For the purpose of the present invention, "slurry reactor" designates any reactor, such as a continuous or simple batch stirred tank reactor or loop reactor, operating in bulk or slurry and in which the polymer forms in particulate form. "Bulk" means a polymerization in reaction medium that comprises at least 60 wt.-% monomer. According to a preferred embodiment the slurry reactor comprises a loop reactor. By "gas phase reactor" is meant any mechanically mixed or fluid bed reactor. Preferably the gas phase reactor comprises a mechanically agitated fluid bed reactor with gas velocities of at least 0.2 m/s. In one embodiment, the polymerization may be conducted in at least one gas phase reactor.

The gas phase reactor can be an ordinary fluidized bed reactor, although other types of gas phase reactors can be used. In a fluidized bed reactor, the bed consists of the formed and growing polymer particles as well as still active catalyst come along with the polymer fraction. The bed is kept in a fluidized state by introducing gaseous components, for instance monomer on such flowing rate, which will make the particles act as a fluid. The fluidizing gas can contain also inert carrier gases, like nitrogen and also hydrogen as a polymer molecular weight controlling agent. The fluidized gas phase reactor can be equipped with a mechanical mixer. The gas phase reactor used can be operated in the temperature range of 50 to 100 °C, preferably between 65 and 90 °C and the reaction pressure between 10 and 40 bar and the partial pressure of monomer between 15 and 30 bar. The temperature in the polymerization in the loop reactor is typically from 50 to 110 °C, preferably from 60 to 100 °C and in particular from 65 to 95 °C. The pressure is from 1 to 150 bar, preferably from 10 to 100 bar.

In another embodiment, the polymerization is conducted in at least two polymerization reactors selected from a slurry- loop and gas phase reactors and combinations thereof. This embodiment is particularly suitable for producing multi(bi)modal polypropylene. It is possible to use several reactors of each type, e.g. one loop reactor and two or three gas phase reactors in series. A preferred embodiment of the invention comprises carrying out the polymerization in a process comprising loop and gas phase reactors in a cascade where the loop reactor operates in liquid propylene.

In addition to the actual polymerization reactors used for producing the propylene homo- or copolymer, the polymerization reaction system can also include a number of additional reactors, such as pre- and/or post-reactors.

It will be appreciated that the term "propylene polymer" encompasses propylene homopolymers (H-PP) and/or propylene copolymers (C-PP). Moreover, the term "propylene copolymer" encompasses propylene random copolymers, heterophasic polymers and mixtures thereof. In a preferred embodiment, the prepolymerized solid Ziegler-Natta catalyst is used for producing a propylene homopolymer or a propylene random copolymer. In another embodiment, the prepolymerized solid Ziegler-Natta catalyst is used for producing a propylene homopolymer. The expression propylene homopolymer (H-PP) as used throughout the instant invention relates to a propylene polymer that consists substantially, i.e. of more than 99.5 wt.-%, still more preferably of at least 99.7 wt.-%, like of at least 99.8 wt.-%, of propylene units. In a preferred embodiment only propylene units in the propylene homopolymer (H-PP) are detectable.

Additionally or alternatively, the propylene polymer is a propylene copolymer (C-PP). In one embodiment, it is possible that the propylene homopolymer is further polymerized in the presence of ethylene and optionally a C4 to C8 alpha-olefin, obtaining thereby an elastomeric propylene copolymer (E) such as to obtain a heterophasic propylene copolymer.

In some examples, an advantage of the implementation of the prepolymerised solid Ziegler-Natta catalyst in the process for producing a propylene polymer is that the propylene polymer obtained has improved powder morphology (compared to a propylene polymer prepared with the same solid Ziegler-Natta catalyst without batch-mode prepolymerization).

### Polypropylene Properties

The prepolymerised Ziegler-Natta catalyst as described herein may be used to produce a polypropylene composition have improved properties.

For example, the propylene polymer may have a melt flow rate MFR₂ (230°C, 2.16 kg) measured according to ISO 1133 within a broad range, like 0.15 to 1000 g/10 min depending on the desired properties of the end applications.

The propylene polymer may have a crystallisation temperature of at least 115 °C, preferably 115 to 145 °C, more preferably 120 to 140 °C, yet more preferably 122 to 137 °C, for example, 126 to 135 °C.

The propylene polymer may have an enthalpy of meting of at least 90 J/g, preferably 95 to 160 J/g, more preferably 103 to 150 J/g, for instance, 115 to 130 J/g.

The propylene polymer may have a tensile modulus according to ISO 527-2 of at least 1800 MPa, preferably 1900 to 3000 MPa, more preferably 2190 to 2400 MPa.

The propylene polymer obtained by the process for producing a propylene polymer can be pelletized and compounded using any of the variety of compounding and blending methods well known and commonly used in the resin compounding art.

In the following the present invention is further illustrated by means of examples.

### EXAMPLES

### Measuring methods

The following definitions of terms and determination methods apply for the above general description of the invention as well as to the below examples unless otherwise defined.

MFR₂ (230 °C / 2.16 kg) is measured according to ISO 1133 at 230 °C and 2.16 kg load.

Melting temperature (Tm), melting enthalpy (Hm) and crystallization temperature (Tc) were measured with a TA Instrument Q200 differential scanning calorimetry (DSC) on 5 to 7 mg samples. DSC was run according to ISO 11357 / part 3 /method C2 in a heat/ cool/ heat cycle with a scan rate of 10 °C/min in the temperature range of -30 to +225°C. Crystallization temperature (Tc) was determined from the cooling step, while melting temperature (Tm) and melting enthalpy (Hm) were determined from the second heating step.

The tensile properties (tensile modulus, tensile strength, tensile stain at strength, tensile stress at break, tensile strain at break) were determined acc. ISO 527-2 on 1A dogbones. Following the standard, a testspeed of 1mm/min was used for tensile modulus and 50mm/min for all other properties. The testing temperature was 23±2 °C. Injection moulding was carried out according to ISO 19069-2.

### Example 1

### a. Preparation of prepolymerised Ziegler-Natta catalyst (Catalyst 1)

A commercially available Ziegler-Natta catalyst was dispersed in oil to form a slurry. First, the catalyst oil slurry (13 kg, 3 kg of dry catalyst, Ti content 1.79 wt.-%) was fed into a reactor equipped with stirrer and heating-cooling jacket. The reactor temperature was set to 25 °C and stirrer speed was set to 140 rpm. More oil was then added (23 kg) to dilute the slurry to ~7 wt.-% slurry. After oil addition, triethyl aluminum or TEAL (100%, 452 g) was added to activate the catalyst (Al/Ti -ratio 3.5 mol/mol). After 10 minutes of stirring, an internal donor, Do, (258 g) was added (Al/Do - ratio 3.5 mol/mol).

1-Butene was added using a dosing cylinder, keeping the temperature controlled below 25 °C. Altogether 3.3 kg of 1-butene was fed over a 2.5 hour period, ensuring that the pressure and temperature at reactor were kept at the desired level. Consumption of butene was checked by letting the pressure stabilise in the reactor before the next addition. The 1-butene was allowed to react for 2 hours following addition, keeping the temperature at 25°C. The reaction mixture was stirred with 140 RPM.

After the two hours, the reactor pressure was lowered to 1 bar(g), and vinyl cyclohexane (VCH, CAS Number 695-12-5) (3 kg) was fed into the reactor at a rate of 60 g/min, while the reactor temperature was increased to 60 °C. After introducing the VCH, the VCH was allowed to react at 60 °C for 16 hours. After 16 hours, a sample was taken and unreacted VCH content was analysed by gas chromatography, GC. With the result being lower than 1000ppm (24ppm), a batch of the prepolymerised Ziegler-Natta catalyst (Catalyst 1) was recovered from the reactor for use in the propylene polymerisation described below. Final calculated Ziegler-Natta catalyst content in the slurry was 7.6 wt.-%.

### b. Propylene Polymerization with Catalyst 1

Propylene polymerisation was carried out in a 5 litre jacketed stainless steel reactor. 139.3 mg triethyl aluminium (TEAL) (from Chemtura, used as received) as a co-catalyst, 27.6 mg dicyclopentyl dimethoxy silane (DCDS) (from Wacker, dried with molecular sieves) as an external donor and 15 ml of n-pentane were mixed and allowed to react for 5 minutes. This mixture was added to the polymerisation reactor at 20 °C. Next, 200 mmol hydrogen and 1360 g propylene were added to the reactor.

Polymerisation was started by introducing the catalyst/oil mixture (172.0 mg of oil/catalyst mixture recovered in Example 1a above mixed with 6 ml of additional oil) to the reactor with propylene (35 g) flush (total propylene 1395 g). Dry catalyst amount was 13.1 mg. The Al/Ti ratio was 250 mol/mol and the AI/DCDS ratio was 10 mol/mol.

After 15 minutes of pre-polymerisation at 20 °C, the reactor temperature was increased to the polymerisation temperature (80 °C) over about 15 minutes. The polymerisation time after reaching polymerisation temperature was 60 minutes. Unreacted propylene was then flashed out by opening the exhaust valve and the reactor was cooled to room temperature. Polymer was collected after flushing the reactor several times with nitrogen, left to dry overnight and then weighed to record the polymer yield (322 g).

### Comparative Example 1

### a. Preparation of prepolymerised Ziegler-Natta catalyst (Catalyst C1)

Catalyst C1 was prepared in a similar manner to Catalyst 1 in Example 1, but with slightly adjusted Al/Ti - and Al/Do -ratios (1 mol/mol and 0.75 mol/mol respectively). Also, no vinyl cyclohexane (VCH) was added to the catalyst preparation, but the catalyst preparation was considered to be ready after the 2 hours reaction period with 1-butene. A batch of this prepolymerised Ziegler-Natta catalyst (Catalyst C1) was removed from the reactor for use in the propylene polymerisation described below.

### b. Propylene Polymerisation with Catalyst C1

Propylene polymerisation was carried out in a 5 litre jacketed stainless steel reactor. 143.4 mg triethyl aluminium (TEAL) (from Chemtura, used as received) as a co-catalyst, 28.6 mg dicyclopentyl dimethoxy silane (DCDS) (from Wacker, dried with molecular sieves) as an external donor and 15 ml of n-pentane were mixed and allowed to react for 5 minutes. This mixture was added to the polymerisation reactor at 20 °C. Next, 200 mmol hydrogen and 1360 g propylene were added to the reactor. Polymerisation was started by introducing the catalyst/oil mixture (174.7 mg of oil/catalyst mixture containing Catalyst C1 that was recovered from Comparative Example 1a above mixed with 6 ml of additional oil) to the reactor with propylene (35 g) flush (total propylene 1395 g). The dry catalyst amount was 13.5 mg. The Al/Ti ratio was 250 mol/mol and the AI/DCDS ratio was 10 mol/mol. After 15 minutes of pre-polymerisation at 20 °C, the reactor temperature was increased to the polymerisation temperature (80 °C) over about 15 minutes. The polymerisation time after reaching polymerisation temperature was 60 minutes. Unreacted propylene was then flashed out by opening the exhaust valve and the reactor was cooled to room temperature. Polymer was collected after flushing the reactor several times with nitrogen, left to dry overnight and then weighed to record the polymer yield (279 g).

### Comparative Example 2

### a. Preparation of prepolymerised Ziegler-Natta catalyst (Catalyst C2)

The same commercially available Ziegler-Natta catalyst used in Example 1 and Comparison Example 2 was dispersed in oil to form a slurry. The catalyst oil slurry (21.5 kg, 5 kg of dry catalyst) was fed into the reactor equipped with a stirrer and heating-cooling jacket. The reactor temperature setting was set to 15 °C and the slurry was stirred at 140 rpm. More oil was added (13,9 kg) to dilute slurry to ~12 wt.-% slurry. After the oil addition, TEAL (100%, 750 g) was added to activate the catalyst (Al/Ti -ratio 3.5 mol/mol). After an 10 minutes stirring, D-donor (430 g) was added (Al/Do - ratio 3.5 mol/mol. VCH feed (5 kg) was added at about 60 g/min and, at the same time, the reactor temperature was increased to 60 °C. After the feeding of VCH, VCH was allowed to react for a further 10 hours at 60 °C. After the 10 hours, a sample was taken and unreacted VCH -content was analysed by gas chromatography (GC). As the result was lower than 1000ppm (110ppm), a batch was recovered for use in the propylene polymerisation discussed below.

### Propylene Polymerization with Catalyst C2

Propylene polymerisation was carried out in a 5 litre jacketed stainless steel reactor. 159.3 mg triethyl aluminium (TEAL) (from Chemtura, used as received) as a co-catalyst, 31.5 mg dicyclopentyl dimethoxy silane (DCDS) (from Wacker, dried with molecular sieves) as an external donor and 15 ml of n-pentane were mixed and allowed to react for 5 minutes. This mixture was added to the polymerisation reactor at 20 °C. Next, 200 mmol hydrogen and 1360 g propylene were added to the reactor. Polymerisation was started by introducing the catalyst/oil mixture (123.8 mg of oil/catalyst mixture recovered in Comparative Example 2a above mixed with 10 ml of additional oil) to the reactor with propylene (35 g) flush (total propylene 1395 g). Dry catalyst amount was 14.9 mg. The Al/Ti ratio was 250 mol/mol and the AI/DCDS ratio was 10 mol/mol. After 15 minutes of pre-polymerisation at 20 °C, the reactor temperature was increased to the polymerisation temperature (80 °C) during about 15 minutes. The polymerisation time after reaching polymerisation temperature was 60 minutes. Unreacted propylene was then flashed out by opening the exhaust valve and the reactor was cooled to room temperature. Polymer was collected after flushing the reactor several times with nitrogen, left to dry overnight and then weighed to record the polymer yield (501 g).

Table 1 summarizes the properties of the polypropylene produced in Example 1b, Comparative Example 1b and Comparative Example 2b. The polypropylene samples of Example 1b, Comparative Example 1b and Comparative Example 2b are designated IE1, CE1 and CE2, respectively.

Crystallisation temperature is a good indicator of how effectively the polypropylene has been nucleated. Higher Tc is indicative more effective nucleation. From Table 1, it can be seen that the prepolymerised Ziegler-Natta catalyst of IE1 has the highest Tc, and highest Hm. The tensile modulus is also higher than in the comparative examples.

| | **IE1** | **CE1** | **CE2** |
|---|---|---|---|
| **Catalyst** | 1 | C1 | C2 |
| **Prepolymer** | PB-PVCH | PB | PVCH |
| **Tensile Modulus/MPa** | 2255 | 1879 | 2185 |
| **MFR₂ (g/10min)** | 13 | 13 | 11 |
| **Tc (°C)** | 129 | 117 | 126 |
| **Tm (°C)** | 166 | 164 | 170 |
| **Hm (J/g)** | 117 | 110 | 102 |

| | | | |
|---|---|---|---|
| PB: polybutene PVCH: polyvinylcyclohexane | | | |

## Claims

1. A process for producing a prepolymerised Ziegler-Natta catalyst composition, said process comprising:
Ai) reacting at least one acyclic alpha-olefin having 2 to 10 carbon atoms in the presence of a Ziegler-Natta catalyst, and
Aii) subsequently reacting a vinyl cycloalkane, a vinyl cycloalkene and/or a vinyl arene in the presence of the Ziegler-Natta catalyst; or
Bi) reacting a vinyl cycloalkane, a vinyl cycloalkene and/or a vinyl arene in the presence of a Ziegler-Natta catalyst, and
Bii) subsequently reacting at least one acyclic alpha-olefin having 2 to 10 carbon atoms in the presence of the Ziegler-Natta catalyst, wherein,
where Bi) a vinyl cycloalkane, a vinyl cycloalkene and/or a vinyl arene is reacted in the presence of a Ziegler-Natta catalyst, and Bii) at least one acyclic alpha-olefin having 2 to 10 carbon atoms is subsequently reacted in the presence of the Ziegler-Natta catalyst, the weight ratio of the at least one acyclic alpha-olefin to the Ziegler-Natta catalyst is less than 200:1

2. A process as claimed in claim 1, which comprises:
Ai) reacting at least one acyclic alpha-olefin having 2 to 8 carbon atoms,
preferably 2 to 6 carbon atoms, in the presence of a Ziegler-Natta catalyst, and
Aii) subsequently reacting a vinyl cycloalkane, a vinyl cycloalkene and/or a vinyl arene in the presence of the Ziegler-Natta catalyst.

3. A process as claimed in claim 1, wherein the acyclic alpha-olefin is selected from ethylene, propylene, 1-butene, 1-pentene, 1-hexene, 1-heptene, 1-octene and any combinations thereof, preferably the acyclic alpha-olefin is selected from of ethylene, propylene, 1-butene, 1-pentene, 1-hexene, 1-heptene and 1-octene, more preferably the acyclic alpha-olefin is 1-butene.

4. A process as claimed in any one of the preceding claims, wherein in step Aii), a vinyl cycloalkane, preferably vinyl cyclohexane, is reacted in the presence of the Ziegler-Natta catalyst, or in step Bi), a vinyl cycloalkane, preferably vinyl cyclohexane, is reacted in the presence of the Ziegler-Natta catalyst.

5. A process as claimed in any one of the preceding claims, wherein, in step Ai), the weight ratio of the at least one acyclic alpha-olefin to Ziegler-Natta catalyst is less than 200:1.

6. A process as claimed in claim 5, wherein, in step Ai) or in step Bii), the weight ratio of the at least one acyclic alpha-olefin to Ziegler-Natta catalyst is less than 100:1, preferably 10:90 to 90:10, more preferably 20:80 to 80:20, even more preferably 30:70 to 70:30, yet more preferably 40:60 to 60:40, still more preferably 45:55 to 55:45.

7. A process as claimed in any one of the preceding claims, wherein, in step Aii) or Bi), the weight ratio of the vinyl cycloalkane, vinyl cycloalkene and/or vinyl arene to Ziegler-Natta catalyst is less than 200:1, preferably less than 100:1, more preferably 10:90 to 90:10, yet preferably 20:80 to 80:20, even more preferably 30:70 to 70:30, still more preferably 40:60 to 60:40, even still more preferably 45:55 to 55:45.

8. A process as claimed in any one of the preceding claims, wherein the Ziegler-Natta catalyst comprises a compound of a transition metal selected from Groups 4 to 6 of the periodic table; a compound of a Group 1 to 3 metal; and an internal donor.

9. A process as claimed in claim 8, wherein the Ziegler-Natta catalyst comprises a titanium compound, a magnesium compound and an internal donor.

10. A process as claimed in any one of the preceding claims, wherein at least one of steps Ai) and Aii), or at least one of steps Bi) and Bii) are carried out in the presence of a co-catalyst and in presence of an external donor.

11. A process as claimed in any one of claims 1 to 10, wherein the prepolymerised Ziegler-Natta catalyst composition comprises Ziegler-Natta catalyst, a polymer having polymeric units derived from the at least one acyclic alpha-olefin having 2 to 10 carbon atoms and a polymer having polymeric units derived from vinyl cycloalkane, a vinyl cycloalkene and/or a vinyl arene.

12. A prepolymerised solid Ziegler-Natta catalyst composition obtainable by a process as claimed in any one of claims 1 to 11.

13. A catalyst system for the polymerisation of propylene, said catalyst system comprising a prepolymerised Ziegler-Natta catalyst composition as claimed in claim 12, a co-catalyst and an external donor.

14. A process for the production of polypropylene, said process comprising polymerising propylene in the presence of a prepolymerised Ziegler-Natta catalyst composition as claimed in claim 12.

15. A process as claimed in claim 14, wherein the prepolymerised Ziegler-Natta catalyst composition forms part of a catalyst system as claimed in claim 13.
